Europäisches Patentamt

European Patent Office

Office européen des brevets

(11) Publication number: **0 115 435**
A2

# EUROPEAN PATENT APPLICATION

(21) Application number: **84300503.4**

(22) Date of filing: **26.01.84**

(51) Int. Cl.³: **B 64 C 25/58**

(30) Priority: **28.01.83 GB 8302434**

(43) Date of publication of application:
**08.08.84 Bulletin 84/32**

(84) Designated Contracting States:
**DE FR GB IT**

(71) Applicant: **AUTOMOTIVE PRODUCTS PUBLIC LIMITED COMPANY**
**Tachbrook Road**
**Leamington Spa Warwickshire CV31 3ER(GB)**

(72) Inventor: **Jenkins, Stanley Frederick Noel**
**Longridge Rode Street**
**Tarporley Cheshire(GB)**

(72) Inventor: **Linekar, Alfred Edgar**
**56, Meeting Lane**
**Penketh Warrington Cheshire(GB)**

(74) Representative: **Adkins, Michael et al,**
**Withers & Rogers 4 Dyer's Buildings**
**Holborn London, EC1N 2JT(GB)**

(54) An aircraft undercarriage.

(57) The undercarriage includes a pair of pivotally interconnected undercarriage legs 32, 33, the latter of which carries a ground wheel 15. A strut 14 extends between lugs 31, 34 on the legs. The strut may either be frangible or fluid operable and normally inhibits relative pivotal movement of the legs. However, if a load in excess of a desired load is applied to the undercarriage, the strut will operate to permit such relative movement. At the limit of such relative movement the lowest point L of the wheel 15 will be below the lowest point P of the undercarriage.

EP 0 115 435 A2

./...

Croydon Printing Company Ltd.

## AN AIRCRAFT UNDERCARRIAGE

The invention relates to an aircraft undercarriage.

Aircraft undercarriages have to be capable of withstanding considerable shock particularly as a result of heavy landings. An object of the present invention is to provide an undercarriage capable of withstanding such landings with reduced risk of damage to the undercarriage.

According to the invention there is provided an aircraft undercarriage including pivotally interconnected parts and energy absorbing means extending between said parts for absorbing energy applied to said parts, said energy absorbing means being arranged normally to inhibit relative pivotal movement between the parts but to permit such relative pivotal movement if a load in excess of a desired load is applied to the parts.

The energy absorbing means may be frangible and may be arranged to fracture if said load in excess of the desired load is applied to said parts. In such a case the frangible means may comprise a first member connected to one of said parts, a second member connected to the other of said parts and a frangible element which normally interconnects the members and which fractures when the excess load is applied to the parts. In such a case the members may be telescopic so that one can move within the other following fracture of the frangible element.

Alternatively, the energy absorbing means may comprise an actuator extending between the pivotally interconnected parts, said actuator including detent means for normally inhibiting said relative pivotal movement but which will allow the relative pivotal movement if said load in excess of the desired load is applied to the parts, the actuator being arranged to absorb the excess applied load. The detent means may also be releasable to enable the actuator to move the parts relatively to each other independently of the applied load.

Preferably the interconnected parts include a leg of the undercarriage which carries a ground wheel. In such a case we prefer the lowest point of the ground wheel always to lie below the lowest extremity of the remainder of the undercarriage after said relative pivotal movement has occurred.

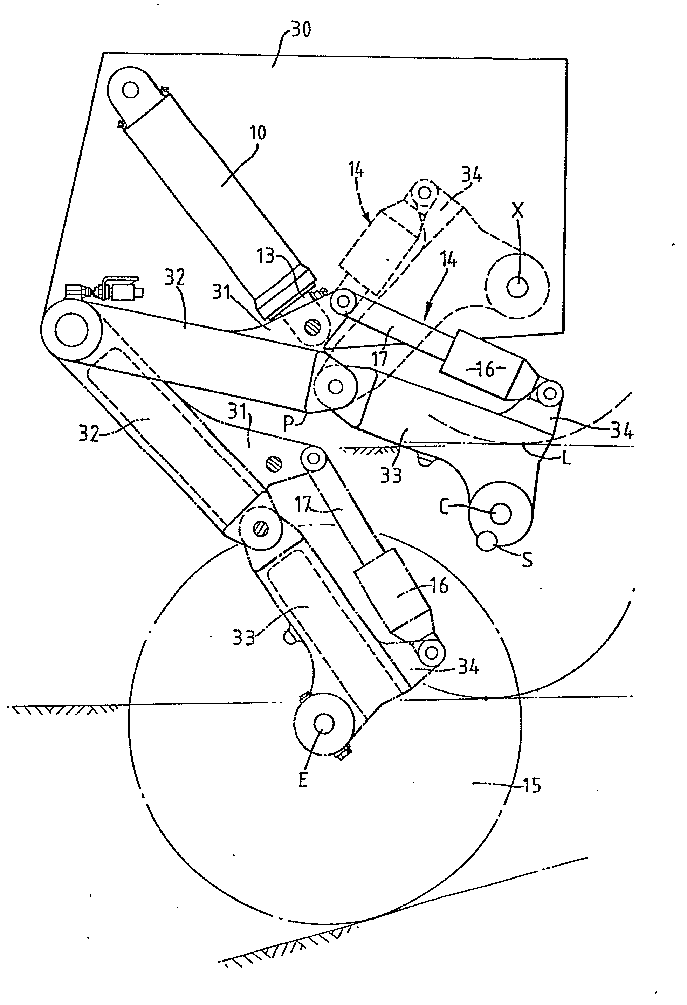

An aircraft undercarriage in accordance with the invention will now be described by way of example with reference to the accompanying drawing which is an elevation of a preferred form of undercarriage for a helicopter.

An oleo 10 is pivotally connected to a fuselage mounting 30. The oleo has a shaft 13 pivotally connected to a lug 31 on a first undercarriage leg 32 which is also pivotally connected to the mounting 30. The leg 32 is pivotally connected to one end of a second undercarriage leg 33 which carries the ground wheel 15 at its other end. A frangible strut 14 extends between the lug 31 and a lug 34 on the leg 33. The strut 14 comprises a cylinder 16 having a coaxial plunger 17 extending therefrom. A frangible element such as a shear pin (not shown) normally prevents relative axial movement between the cylinder 16 and plunger 17.

In use, the oleo shaft 13 is extended or closed in known manner to position the axle of the wheel in position E or C or e.g. a static position S therebetween. If during a heavy landing a load in excess of that which can safely be sustained by the oleo is applied to the undercarriage, the shear pin shears and the frangible struct collapses allowing the strut to occupy the broken line position marked X in the drawing. In that position the lowest point L of the wheel will be below the lowest point P of the remainder of the undercarriage. Therefore the aircraft remains operational until the collapsed strut can be replaced.

Instead of the strut 14 being frangible it could comprise an actuator. In such a case the actuator would serve as a cushion to absorb overloads and could also be used as an adjustment device for retracting the wheel into the X position shown in the drawing. The actuator includes a mechanical lock (constituting the aforesaid detent means) to lock the axle in its E position for landing. To retract the actuator and raise the wheel 15, fluid pressure will release the mechanical lock which will become operative again when the axle occupies the S position or any other desired position. The reverse would apply on lowering the wheel. In an emergency landing the mechanical lock would fail at a load in excess of that which could safely be sustained by the oleo and a relief valve would
open allowing fluid to be forced from the actuator through
relief valves into the atmosphere.

CLAIMS

1.    An aircraft undercarriage including pivotally interconnected parts (32, 33) characterised in that energy absorbing means (14) extends between said parts (32, 33) for absorbing energy applied to said parts, said energy absorbing means being. arranged normally to inhibit relative pivotal movement between the parts but to permit such relative pivotal movement if a load in·excess of a desired load is applied to the parts.

2.    An aircraft undercarriage according to claim 1 characterised in that said energy absorbing means (14) is frangible and is arranged to fracture if said load in excess of the desired load is applied to said parts (32, 33).

3.    An aircraft undercarriage according to claim 2 characterised in that the frangible means (14) comprises a first member (16) connected to one of said parts (33), a second member (17) connected to the other of said parts (32) and a frangible element which normally interconnects the members (16, 17) and which fractures when the excess load is applied to the parts (32, 33).

4.    An aircraft undercarriage according to claim 3 characterised in that the members (16, 17) are telescopic so that one can move within the other following fracture of the frangible element (14).

5.    An aircraft undercarriage according to claim 1 characterised in that said energy absorbing means (14) comprises an actuator extending between the pivotally interconnected parts (32, 33), said actuator including detent means for normally inhibiting said relative pivotal movement but which will allow the relative pivotal movement if said load in excess of the desired load is applied to the parts, the actuator being arranged to absorb the excess applied load.

6.    An aircraft undercarriage according to claim 5 characterised in that the detent means is releasable to enable the actuator to move the parts (32, 33) relatively to each other independently of the applied load.

7.    An aircraft undercarriage according to any preceding claim characterised in that the interconnected parts (32, 33) include a leg (33) of the undercarriage which carries a ground wheel (15).

8.    An aircraft undercarriage according to claim 7 characterised in that the lowest point (L) of the ground wheel (15) will always lie below the lowest extremity (P) of the remainder of the undercarriage after said relative pivotal movement has occurred.